# EUROPÄISCHE PATENTANMELDUNG

(11) **EP 4 631 414 A1**
(43) Veröffentlichungstag der Anmeldung: **15.10.2025**
(21) Anmeldenummer: 25166957.8
(22) Anmeldetag: 28.03.2025
(51) Int. Cl.: A47L 13/51, B62B 3/02

(54) **REINIGUNGSWAGEN**

(30) Priorität: 10.04.2024 DE 102024109954
(71) Anmelder: Pfennig Reinigungstechnik GmbH, 87471 Durach (DE)
(72) Erfinder: Pfennig, Dietmar, 87477 Sulzberg (DE); Brüstle, Kevin Maximilian, 87527 Sonthofen (DE)
(74) Vertreter: VKK Patentanwälte PartG mbB

(57) **Zusammenfassung**

Die vorliegende Erfindung betrifft einen Reinigungssystemwagen (1), aufweisend ein Grundmodul (2) und daran unmittelbar oder mittelbar angeordneten Anbauteilen (3), einzeln oder in Kombination gewählt aus der Gruppe gebildet durch: Rollen (4), Griffe (5), Halterungen (6) für Behälter, Halterungen (7) für Reinigungsgeräte, **dadurch gekennzeichnet,** dass das Grundmodul (2) als ein selbsttragendes Edelstahlblech (8) ausgebildet ist, wobei das Edelstahlblech (8) Befestigungsmöglichkeiten (9) zur Befestigung der Anbauteile (3) aufweist.

## Beschreibung

Die vorliegende Erfindung betrifft einen Reinigungssystemwagen für die insbesondere gewerbliche Reinigung, wie er in unterschiedlicher Ausprägung in der Krankenhaus-, der Unterhalts- und der Reinraumreinigung eingesetzt wird.

Derartige Reinigungssystemwagen sind eingerichtet zum gleichzeitigen Transport von frischen und gebrauchten Reinigungstextilien, Reinigungsmitteln, Dosiervorrichtungen, Behältern, Halterungen und Geräten zum gewerblichen Reinigen wie Moppbezughalter. Sie weisen üblicherweise drei Arbeitsbereiche auf, insbesondere in Fahrtrichtung eines Reinigungswagens gesehen von hinten nach vorne einen Entsorgungsbereich, einen Vorratsbereich und einen Befeuchtungs- /Dosierungsbereich, sofern nicht vorbefeuchtete Moppbezüge mitgeführt werden.

Derartige Reinigungssystemwagen weisen ein Grundmodul auf, an dem Rollen und ein Handgriff zum Führen des Reinigungssystemwagens befestigt sind.

Insbesondere hinsichtlich der geschilderten, auf dem Grundmodul mitgeführten Gegenstände sind sie oftmals modular aufgebaut, so dass ein Benutzer sie an seine spezifischen Reinigungsbedürfnisse und damit an die zu reinigende Umgebung anpassen kann. Dies betrifft vor allem die Art, Anzahl und Anbringung von Reinigungsutensilien, Reinigungsflüssigkeiten, Vorratsbehältnissen für Reinigungstextilien, Behältnissen zur Aufnahme von benutzten Reinigungstextilien, Abfall- und Wäschesäcken und Geräten zum gewerblichen Reinigen, die je nach Einsatzzweck gewählt werden. Alle Komponenten dieser Reinigungssystemwagen lassen sich auf verschiedene Modelltypen anpassen, beliebig erweitern und jederzeit umrüsten - passend zu den Anforderungen des jeweiligen zu reinigenden Objekts.

Das Grundmodul eines solchen Reinigungssystemwagens weist einen geschweißten Rohrrahmen aus Edelstahl für den Reinraumeinsatz und den Einsatz im Gesundheitswesen auf, für andere Einsatzbereich ist der Rohrrahmen des Grundmoduls aus einer Kunststoff-Aluminium-Kombination gebildet oder besteht ganz aus einem Recyclingkunststoff. Auf diesen Rohrrahmen können Edelstahlbleche aufgelegt sein.

Im erstgenannten Einsatzbereich sind die mitgeführten Behältnisse ebenfalls aus Edelstahl oder einem autoklavierbaren Kunststoff. Gleiches gilt für die erwähnten Anbauteile, wie Rollen, Halterungen aller Art, Behälterfixierungen, etc. die üblicherweise aus gebogenen und angeschweißten Edelstahldrähten gebildet sind, sowie Deckel aus Edelstahlblechen. Mit anderen Worten ist das Grundmodul eines solchen Reinigungssystemwagens aus hochwertigen und hygienisch unbedenklichen Materialien in aufwendiger Weise gefertigt, zumal insbesondere für den Einsatz in Reinräumen und zur Krankenhausreinigung auch ergonomische Handhabung und hygienisch sichere Anwendung der Reinigungssystemwagen von großer Bedeutung sind.

Vor diesem Hintergrund stellt sich die Erfindung die Aufgabe, einen kostengünstiger herstellbaren Reinigungssystemwagen unter Beibehaltung der Hygieneanforderungen anzugeben.

Diese Aufgabe wird gelöst durch einen Reinigungssystemwagen, aufweisend ein Grundmodul und daran unmittelbar oder mittelbar angeordneten Anbauteilen, einzeln oder in Kombination gewählt aus der Gruppe gebildet durch: Rollen, Griffe, Halterungen für Behälter, Halterungen für Reinigungsgeräte, wobei das Grundmodul als ein selbsttragender plattenartiger Körper ausgebildet ist, wobei der plattenartige Körper Befestigungsmöglichkeiten zur Befestigung der Anbauteile aufweist.

Bei dem erfindungsgemäßen Reinigungssystemwagen entfällt mit großem Vorteil die bislang verwendete geschweißte Rohrrahmenkonstruktion des Grundmoduls. Der erfindungsgemäße Ersatz des bisherigen Rohrrahmens durch den erfindungsgemäßen plattenartigen Körper- der darüber hinaus erfindungsgemäß in unterschiedlichen Gestaltungen für unterschiedliche Aufbauten vorgesehen ist, - führt nicht nur zu einer Kostenreduktion bei der Herstellung sondern auch zu einer Gewichtsreduktion und vor allem zu einer Frachtkostenreduktion: Bisherige Reinigungssystemwagen wurden vom Hersteller aufgrund der erforderlichen Schweißungen des Grundmoduls bereits fertig aufgebaut an dessen Kunden versandt, so dass entsprechend viel Luft verpackt und transportiert werden musste. Aufgrund der Erfindung kann nun die Montage der Anbauteile an das Grundmodul beim Kunden und/oder durch diesen selbst erfolgen, wodurch ein kompakterer Versand ermöglicht ist. Hierzu werden die Anbauteile, insbesondere die Rollen und der Griff, angeschraubt.

Der plattenartige Körper der Erfindung ist bevorzugt eine tatsächliche Platte, kann aber auch ein Körper sein, der insbesondere über Querstreben oder Sicken auf seiner im Benutzungsfall einem Boden zugewandte Seite eine stärkere Dreidimensionalität als eine Platte aufweist. Im ersten Fall ist er ein flaches, überall gleich dickes, auf zwei gegenüberliegenden Seiten von je einer im Verhältnis zur Dicke sehr ausgedehnten ebenen Fläche begrenzter Körper. In jedem Fall ist er aber insbesondere aufgrund der Materialstärke und Materialart sowie der Konstruktion so aufgebaut, dass selbsttragend ist und damit die entsprechende Stabilität für einen dauerhaften Einsatz besitzt.

In Ausgestaltung der Erfindung ist vorgesehen, dass der plattenartige Körper Aufkantungen aufweist und/oder, dass die Halterungen für Behälter wenigstens zum Teil als Aussparung ausgebildet sind. Mit Vorteil stabilisieren die Aufkantungen den plattenartigen Körper gegen Verwinden und Verbiegen und ermöglichen so die Verwendung einer dünneren Grundplatte, was wiederum Gewicht spart und den Reinigungssystemwagen damit leichter transportabel und handhabbar macht. Zusätzlich haben diese Aufkantungen auch die Funktion, Begrenzungen/Anschläge für Behälter zu bilden, und diese so verrutschsicher auf dem Reinigungssystemwagen zu führen. Die Aussparungen reduzieren erneut das Gewicht und bilden gleichzeitig eine horizontale als auch eine vertikale Führung für einen sie im Benutzungsfall durchsetzenden Behälter.

Diese Aussparungen und Aufkantungen sowie die im plattenartigen Körper ebenfalls vorgesehenen Durchgangsöffnungen für Verbindungsmittel sind mit großem Vorteil durch kostengünstige Stanz- und Biegearbeiten am plattenartigen Körper hergestellt. Dies ermöglicht die Verwendung einfacher Bleche in gewünschter Größe, die auch mittels Folgeverbundwerkzeugen entsprechend bearbeitet werden können.

Weist der Reinigungssystemwagen unterschiedliche, gegeneinander austauschbare selbsttragende plattenartige Körper auf, so ist mit Vorteil eine individuelle Anpassung an Kundenwünsche ermöglicht, der aus mehreren erfindungsgemäß möglichen plattenartigen Körpern wählen und so nach seiner Vorgabe individualisierte Reinigungswagen zusammenstellen kann.

In Weiterbildung der Erfindung ist vorgesehen, dass der plattenartige Körper aus einem stanz- und biegbarem Material gebildet ist, insbesondere aus einem Edelstahl oder aus einem passivierten Metall, oder er aus einem Faserverbundwerkstoff gefertigt ist. Unter Edelstahl versteht die Erfindung dabei u.a. unlegierte Edelstähle, hochlegierte Stähle, insbesondere solche, die für Reinräume jeglicher Art geeignet und zugelassen sind oder werden und die insbesondere nichtrostend sind, beispielsweise V2A und V4A-Stähle. Unter einem passivierten Metall werden alle Metalle verstanden, deren Oberfläche so verändert wurde, dass eine Sauerstoffkorrosion des Grundwerkstoffes verhindert oder mindestens stark verlangsamt ist. Diese Veränderung kann auch durch Eloxieren erfolgt sein. Bevorzugt ist das Material ebenfalls ohne Qualitätsminderung wiederholt autoklavierbar und damit reinraumgeeignet.

In Weiterbildung der Erfindung ist vorgesehen, dass ein Anbauteil als Rohrrahmen ausgebildet ist, insbesondere dasjenige Anbauteil, das einen Griff trägt. Dieses im Betriebszustand vertikal ausgerichtete Anbauteil trägt üblicherweise neben einem Griff auch noch Befestigungen für Behälter, insbesondere auch für Entsorgungsbehälter, und für Reinigungsgeräte wie Mopphalter. Die Verwendung eines Rohrrahmens, der mit der selbsttragenden Edelstahlplatte verschraubt ist, reduziert das Gewicht des Reinigungssystemwagens und bietet entsprechende Befestigungsmöglichkeiten für die genannten weiteren Gegenstände. Dieser Rohrrahmen ist bevorzugt aus Edelstahlrohren zusammengesetzt, insbesondere geschweißten Edelstahlrohren.

In Ausgestaltung der Erfindung ist vorgesehen, dass zwischen dem plattenartigen Körper und einem Anbauteil eine Dichtung angeordnet ist. Diese Dichtung verbessert die Hygiene, da sie Spalten verschließt, in die sich ansonsten Keime oder Staubpartikel setzen könnten. Diese Dichtung ist bevorzugt eine Kunststoffdichtung, insbesondere aus reinraumgeeigneten und/oder autoklavierbaren Kunststoffen kann in einer Ausführungsform auch eine Metalldichtung sein.

Diese Dichtung kann schließlich noch gefast ausgebildet sein, um so stets eine definierte Anlage an den Dichtsitzen zu haben.

Die Erfindung wird im Weiteren anhand der Figuren der Zeichnung näher erläutert, wobei dieselben Bezugszeichen für dieselben Bauteile verwendet werden. Im Einzelnen zeigen:
Fig. 1: eine perspektivische Ansicht eines erfindungsgemäßen Reinigungssystemwagens,
Fig. 2: eine Ansicht eines erfindungsgemäßen Reinigungssystemwagens von unten,
Fig. 3: eine Explosionsdarstellung und
Fig. 4: eine Detaildarstellung einer Dichtung.

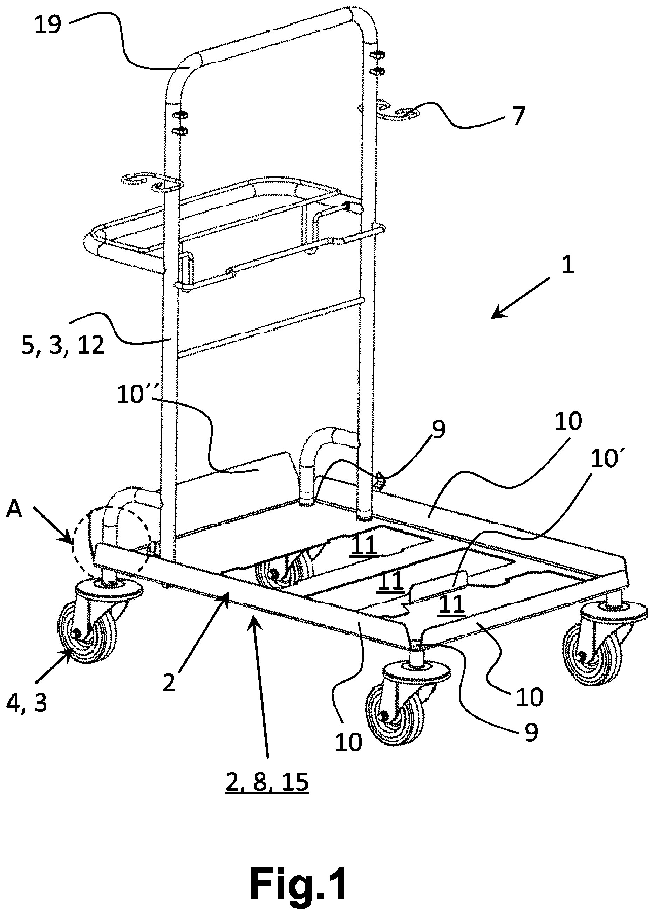

**Fig. 1** zeigt eine perspektivische Ansicht eines erfindungsgemäßen Reinigungssystemwagens 1. In dieser Ausführungsform ist der selbsttragende, plattenartige Körper 8 ein Edelstahlblech. Er kann wie zuvor geschildet jedoch auch aus einem anderen Material wie einem Faserverbundwerkstoff oder einem passivierten Metall gebildet sein kann, solange er ohne Qualitätsverlust autoklavierbar und reinraumtauglich bleibt. Zu erkennen sind zunächst die in etwa rechteckige Grundform dieses Edelstahlbleches 8, das das erfindungsgemäße Grundmodul 2 bildet. Das Edelstahlblech 8 weist Aufkantungen 10 auf, insbesondere randständig angeordnet und voneinander in den Eckbereichen beabstandet. Ausstanzungen 11 in der Grundfläche 15 des Edelstahlbleches 8 bilden Halterungen für Behälter, die diese Ausstanzungen 11 im Benutzungsfall zumindest teilweise durchsetzen und so sowohl horizontal als auch vertikal geführt sind. In den vier Ecken des Grundmoduls 2 befinden sich auf der Unterseite Befestigungsmittel, über die Rollen 4 am Grundmodul 2 befestigt, insbesondere angeschraubt, werden. Diese Rollen 4 gehören zu den Anbauteilen 3, die an das Grundmodul 2 montiert sind bzw. werden.

Im hinteren Bereich des Grundmoduls 2 befindet sich eine Aufkantung 10", die höher ausgebildet ist als die anderen drei randständigen Aufkantungen 10. Hierdurch kann mit Vorteil ein in diesem Bereich des Reinigungssystemwagens befindlicher Behälter für benutzte Reinigungstextilien auch in seinem Fußbereich gestützt und geführt werden. Derartige Behälter sind oftmals als Kunststoffsäcke ausgebildet und entsprechend faltbar-flexibel.

Eine Aufkantung 10' in der Grundfläche 15 dient ebenfalls als Führung für einen Behälter. Die Flächenformen der Ausstanzungen 10 sind dabei mit Vorteil an die jeweilige Form des aufzunehmenden Behälters angepasst, sie können einfach rechteckig oder mit komplizierteren Formen ausgebildet sein.

Der als geschweißter Rohrrahmen 12 aus Edelstahl ausgebildete Griff 5 ragt vertikal über das Grundmodul 2. Unter Griff 5 wird dabei das gesamte Anbauteil 3 verstanden, der eigentliche Griffbereich 19 findet sich oben an diesem Anbauteil. Dieses Anbauteil 3 trägt mit der Halterung 7 für einen Mopphalter, einem Reinigungsgerät, ein weiteres Anbauteil im Sinne der Erfindung. Es bietet ebenfalls Befestigungsmöglichkeiten 9 für weitere Utensilien, die für den Reinigungsvorgang benötigt werden.

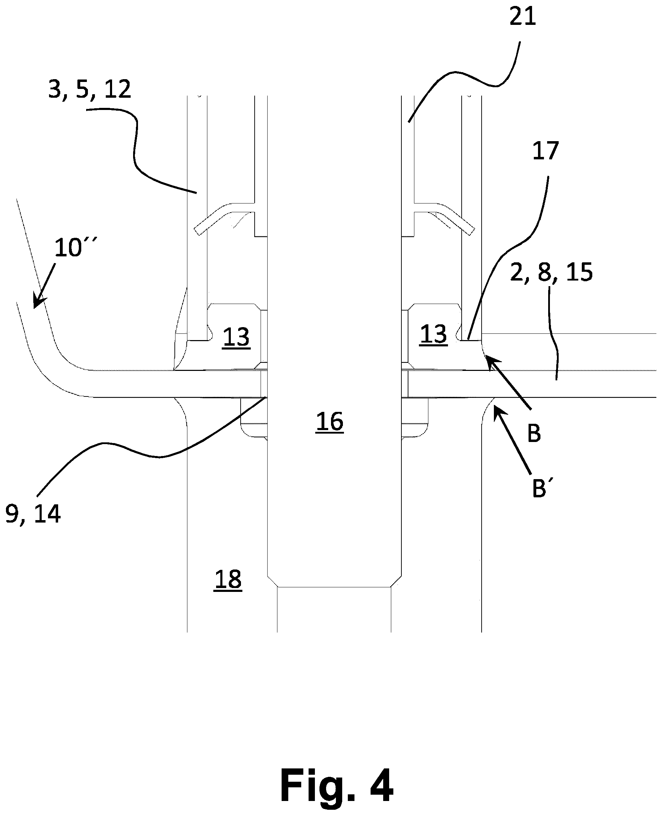

Ein mit dem Buchstaben A gekennzeichneter Bereich zeigt den in Fig. 4 im Schnitt dargestellten Bereich.

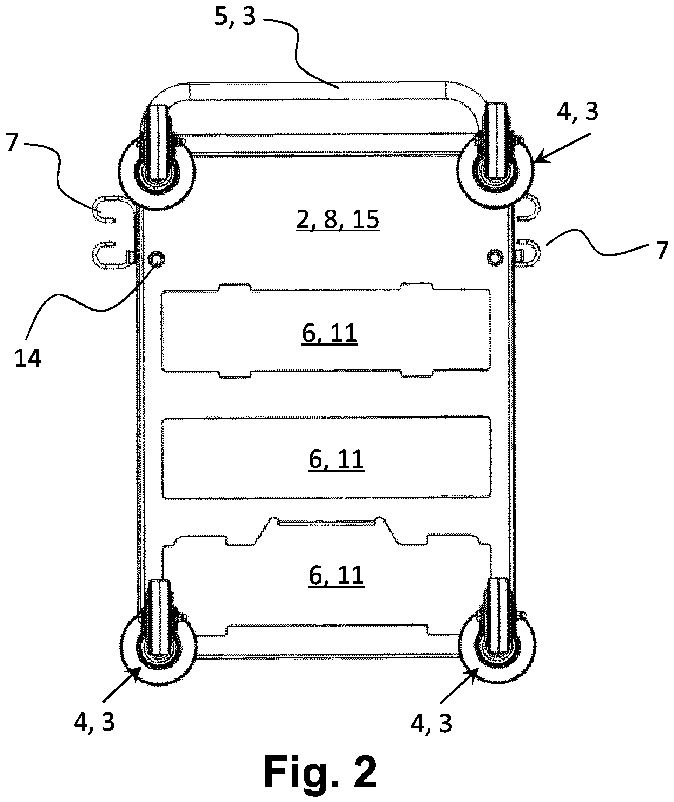

**Fig. 2** zeigt einen erfindungsgemäßen Reinigungssystemwagen 1 von dessen Unterseite.

Zu erkennen sind vier Rollen 4, die in den Ecken des Grundmoduls 2, befestigt sind. Von den vier von Befestigungsmitteln durchsetzten Durchgangsöffnungen 14 zur Befestigung des Anbauteils "Griff" 3, 5 am Grundmodul 2 sind zwei zu erkennen, die anderen beiden sind durch je eine Rolle 4 verdeckt. Gut zu erkennen sind die Ausstanzungen 11 zur Halterung / Führung von Behältern, insbesondere mit frischen Reinigungstextilien, Reinigungsflüssigkeiten und dergleichen mehr.

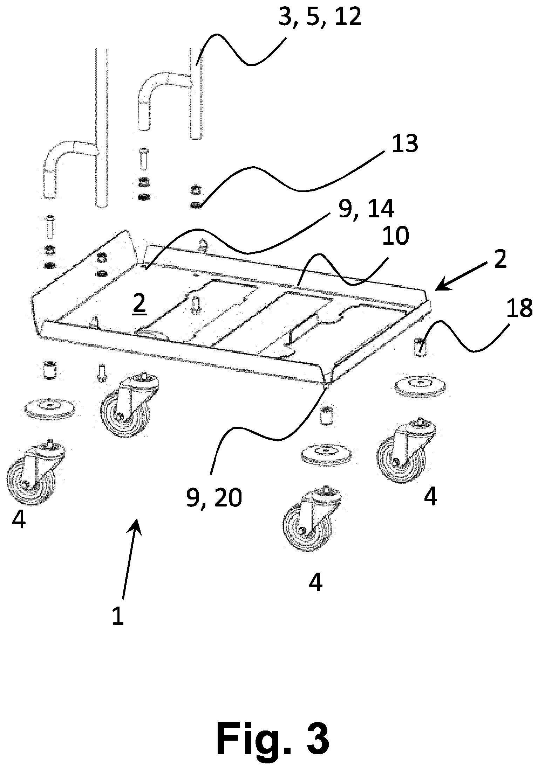

**Fig. 3** zeigt eine Explosionsdarstellung eines Teils der Ausführungsform des Reinigungssystemwagens 1. An dasselbe Grundmodul 2 wie in den Figuren 1 und 2 wird das Anbauteil 3 "Griff" 5 als Rohrrahmen 12 befestigt, ebenso die Rollen 4. Zu erkennen sind Befestigungsmöglichkeiten 9 in dem Grundmodul 2, die als Durchgangsöffnung 14 ausgebildet sind, bzw. am vorderen Endes des Reinigungssystemwagens 1 als insbesondere angeschweißte (Gewinde)Bolzen 20.

Diese Darstellung zeigt deutlich die mit der Erfindung mit großem Vorteil erreichte, konstruktiv einfache Transportfreundlichkeit des erfindungsgemäßen Reinigungssystemwagens, der im Wesentlichen aus den beiden flachen Bauteilen Grundmodul 2 und Griff 5 nebst weiteren, deutlich kleineren und platzsparend in einer Transportverpackung unterbringbaren Anbauteilen 3 besteht.

**Fig. 4** zeigt eine in etwa scheibenförmige Dichtung 13 im Detail in Einbaulage an einer Rolle 4 als Anbauteil 3 unterhalb der Grundfläche 15 und dem Anbauteil "Griff" 3, 5 oberhalb derselben. Die Grundfläche 15 weist eine Durchgangsöffnung 14 auf, die durch ein Befestigungsmittel 16 durchsetzt ist, bei dieser Ausführungsform an dieser Stelle des Reinigungswagens ein Gewindebolzen. In Weiterbildung der Erfindung kann das Befestigungsmittel 16 an dieser oder anderer Stelle auch ein an dem plattenartigen Körper 8 befestigte Sternmutter, Stehbolzen oder dergleichen mehr sein.

Diese Dichtung 13 ist bevorzugt aus Edelstahl und weist einen Winkel B mit Anlageflächen 17 auf, so dass eine sichere Abdichtung an der Außenseite zwischen den Baugruppen erreicht ist, was das Eindringen von Flüssigkeit in den Spalt verhindert und damit den erfindungsgemäßen Wagen hygienisch verbessert. Hierzu ist auch ein Winkel B' vorgesehen, der an der Rolle 4, bzw. dessen Distanz- und Verbindungsstück 18 angeordnet ist. Der Gewindebolzen 16 ist dabei mit dem Verbindungsstück 18 und einer Hülse 21 mit Innengewinde verschraubt, die in den Rohrrahmen 12 eingreift, so dass Rolle 4 und Rohrrahmen 12 gegen das Grundmodul 2 verspannt sind.

Mit großem Vorteil ermöglicht die erfindungsmäße Ausbildung des Grundmoduls 2 als Edelstahlblech 8 einen reinraumgeeigneten, konstruktiv einfachen, transportfreundlichen und modular an Kundenwünsche anpassbaren Reinigungssystemwagen.

### BEZUGSZEICHENLISTE

- 1: Reinigungssystemwagen
- 2: Grundmodul
- 3: Anbauteil
- 4: Rolle
- 5: Griff
- 6: Halterung für Behälter
- 7: Halterung für Reinigungsgeräte
- 8: Selbsttragender, plattenartiger Körper
- 9: Befestigungsmöglichkeit
- 10: Aufkantung
- 11: Aussparung
- 12: Rohrrahmen
- 13: Dichtung
- 14: Durchgangsöffnung Verbindungsmittel
- 15: Grundfläche
- 16: Befestigungsmittel
- 17: Anlagefläche
- 18: Distanzstück
- 19: Griffbereich
- 20: Bolzen
- 21: Hülse

## Patentansprüche

1. Reinigungssystemwagen (1), aufweisend ein Grundmodul (2) und daran unmittelbar oder mittelbar angeordneten Anbauteilen (3), einzeln oder in Kombination gewählt aus der Gruppe gebildet durch: Rollen (4), Griffe (5), Halterungen (6) für Behälter, Halterungen (7) für Reinigungsgeräte, **dadurch gekennzeichnet, dass** das Grundmodul (2) als ein selbsttragender plattenartiger Körper (8) ausgebildet ist, wobei der plattenartige Körper (8) Befestigungsmöglichkeiten (9) zur Befestigung der Anbauteile (3) aufweist.

2. Reinigungssystemwagen (1) gemäß Anspruch 1, **dadurch gekennzeichnet, dass** der plattenartige Körper (8) Aufkantungen (10) aufweist und/oder, dass die Halterungen (6) für Behälter wenigstens zum Teil als Aussparung (11) ausgebildet sind.

3. Reinigungssystemwagen (1) gemäß Anspruch 1 oder 2, **dadurch gekennzeichnet, dass** er unterschiedliche, gegeneinander austauschbare plattenartige Körper (8) aufweist.

4. Reinigungssystemwagen (1) gemäß einem der Ansprüche 1, 2 oder 3, **dadurch gekennzeichnet, dass** der plattenartige Körper (8) aus einem stanz- und biegbarem Material gebildet ist, insbesondere aus einem Edelstahl, einem passivierten Metall, einem Faserverbundwerkstoff.

5. Reinigungssystemwagen (1) gemäß einem der vorherigen Ansprüche, **dadurch gekennzeichnet, dass** ein Anbauteil (3) als Rohrrahmen (12) ausgebildet ist, insbesondere dasjenige Anbauteil (3), das einen Griff (5) trägt.

6. Reinigungssystemwagen (1) gemäß einem der vorherigen Ansprüche, **dadurch gekennzeichnet, dass** er eine Dichtung (13) zwischen dem plattenartigen Körper (8) und einem Anbauteil (3) aufweist.

7. Reinigungssystemwagen (1) gemäß einem der vorherigen Ansprüche, **dadurch gekennzeichnet, dass** die Dichtung (13) gefast ausgebildet ist und/oder eine Anlagefläche (17) aufweist.
